# EUROPEAN PATENT APPLICATION

(11) **EP 4 541 991 A1**
(43) Date of publication of application: **23.04.2025**
(21) Application number: 23204512.0
(22) Date of filing: 19.10.2023
(51) Int. Cl.: E05D 3/12, E05D 15/58, E05F 15/60, B60J 5/04

(54) **POWER ACTUATED SWING AND SLIDE DOOR FOR VEHICLES AND POWER ACTUATING SYSTEM**

(71) Applicant: Wuhan Lotus Cars Co., Ltd., Wuhan, Hubei (CN)
(72) Inventor: Rasel, Wolfgang, 65385 Rüdesheim (DE); Koppala, Deepak, 80809 München (DE)
(74) Representative: Elzaburu S.L.P.

(57) **Abstract**

The present disclosure relates to power actuated swing and slide doors for vehicles and a respective power actuating system. Provided is a power control and power operation for a non-sequential door opening system. This system allows in particular an independent powered opening of the rear attached rear doors of four door B-pillar less vehicles.

## Description

The present disclosure relates to power actuated swing and slide doors for vehicles and a respective power actuating system. Provided is a power control and power operation for a non-sequential door opening system. This system allows in particular an independent powered opening of the rear attached rear doors of four door B-pillar less vehicles.

### Background

During the last couple of years, the design of vehicle doors has again implemented the idea of adjacent two-part doors known under the terms coach doors, flexdoors, freestyle doors, rear access doors, or rear-hinged doors. When referring to the side doors of a vehicle, this typically means that the front doors are hinged at the front and the rear doors are hinged at the rear. Single rear-hinged doors are also commonly known as "suicide doors" following the safety troubles in earlier times. A particular interest has now found this idea for the construction of four door B-pillar less vehicles where this concept allows for a more comfortable entry for passengers or easier loading of cargo.

However, this design has a distinctive drawback particularly when omitting the B-pillar. In order to provide sufficient vehicle body support, the two doors or door segments generally will overlap and interlock. Hence, at most of current vehicles with coach doors, the front door must be opened first before the rear door can be opened because the overlapping door segments are both pivotally hinged. A solution to this problem has been found in the construction of at least one of the doors or door segments, typically the rear door, as a slide and swing door. Examples of such a construction can be found in US 2007/152 473 A1 or US 2019/077 233 A1. There, the respective door or door segment will first slide sidewards until the overlap is cleared before swinging the door open by pivoting. This means that the opening process is done in two consecutive steps. During the sliding motion, the side of the door with the pivot axis is also moved away from the vehicle body while the overlapping side is guided in a guide rail.

As the examples mentioned above demonstrate, the first step of the sliding motion is sometimes also supported by a power actuator but there is no full power operation of the doors. Moreover, the power actuator for the first step which needs to be installed adjacent to the door opening in the body of the vehicle is regularly quite large in order to be able to provide sufficient power and torque while the available space is small.

Hence, there is a need for improvement of the coach doors in terms of the provision of full power operation and a reduction of the needed installation space. It is an object of the present invention to provide such power actuated swing and slide doors for vehicles and a respective power actuating system.

### Summary of disclosure

In a first aspect, this disclosure relates to a power actuated door for vehicles, wherein the door is with a first end pivotably and translationally connected to a peripheral side of an opening in the vehicle and a second end distal to the first end is provided with a guide pin, which is disconnectably guided by a guide rail which is installed parallel to the opening on a body part of the vehicle; and
wherein the door is provided with a power actuating system comprising
- a first actuator having a first actuating member and being installed on a body part of the vehicle adjacent to the first end of the door;
- a second actuator having a second actuating member and being installed on the door of the vehicle;
- a hinge arrangement having a pivot axis **P₁** fixed to the body part of the vehicle and a pivot axis **P₂** connected to the second actuator wherein the first actuating member acts on a point on a first branch of the hinge arrangement and wherein the second actuating member acts on a point on a second branch of the hinge arrangement; and
- a controller configured to control movement of the power actuating system in a first step from a fully closed position of the door to an intermediate position and in a second step from the intermediate position to a fully open position of the door,

wherein in the first step the hinge arrangement is rotated around pivot axis **P₁** by action of the first actuating member causing the door to slide guided on the second end by the guide pin in the guide rail in the direction of the first end which simultaneously is pushed outside the opening of the vehicle so that at the end of the first step the guide pin is in its detachable position, and
wherein in the second step the door is rotated around pivot axis **P₂** by action of the second actuating member causing the guide pin to detach from the guide rail, and
wherein the controller activates in the first step the second actuator simultaneously with the first actuator and in the second step only the second actuator.

The detachable position of the guide pin at the end of the first step can be a position in which the guide pin can be detached from the guide rail, e.g., by traversal movement of the door and thus the guide pin. The detachable position may also be a position where the guide pin can be retracted from the guide rail.

In a second aspect, this disclosure relates to a power actuating system for doors of vehicles comprising
- a first actuator having a first actuating member and to be installed on a body part of the vehicle at a peripheral side of an opening in the vehicle adjacent to a first end of the door;
- a second actuator having a second actuating member and to be installed in the door of the vehicle;
- a hinge arrangement having a pivot axis **P₁** fixed to the body part of the vehicle and a pivot axis **P₂** connected to the second actuator wherein the first actuating member acts on a point on a first branch of the hinge arrangement and wherein the second actuating member acts on a point on a second branch of the hinge arrangement; and
- a controller configured to control movement of the power actuating system in a first step from a fully closed position of the door to an intermediate position and in a second step from the intermediate position to a fully open position of the door, wherein in the first step the hinge arrangement is rotated around pivot axis **P₁** by action of the first actuating member, and wherein in the second step the door is rotated around pivot axis **P₂** by action of the second actuating member, and wherein the controller is configured to activate in the first step the second actuator simultaneously with the first actuator and in the second step only the second actuator.

In a third aspect, this disclosure relates to a method for controlling a power actuating system for doors of vehicles according to the second aspect comprising a first actuator and a second actuator, wherein movement of the power actuating system is effected in two consecutive steps and in a first step the second actuator is activated simultaneously with the first actuator and in a second step only the second actuator.

In a fourth aspect, this disclosure relates to a computer program product comprising portions of program code which, when executed by a processor of a controller, configure the controller to perform the method according to the third aspect.

In a fifth aspect, this disclosure relates to a controller for a power actuating system for doors of vehicles, the controller comprising a processor and a storage device operatively coupled to the processor, wherein the storage device comprises portions of program code which, when executed by the processor, cause the controller to perform the method according to the third aspect.

In a sixth aspect, this disclosure relates to a vehicle comprising a controller according to the fifth aspect.

### Details of disclosure

The details of this disclosure relate to the aspects described in the summary of disclosure. Any of the features of the embodiments described hereinafter may relate to the power actuated door for vehicles as well as the power actuating system, the controller, and the method of controlling the power actuating system.

The present inventors have found that with the existing designs of the door mechanism and actuator a suitable power operated swing and slide door is hardly to achieve. One of the problems encountered is the contradiction between the brake function for door check and the operating function of the power actuation system. The present disclosure solves this problem by implementing two power actuators - one in the vehicle body and one in the door - and operating them simultaneously. This balances the forces within the power actuation system and allows for a smaller power actuator in the vehicle body. Further, this power actuation system for a non-sequential door opening allows for an independent fully powered opening of the swing and slide door, typically the rear door.

Of course, the disclosed power actuated door may also be used as a single door where the design of the vehicle has rear attached doors which slide behind the A-pillar or for cargo compartment doors positioned at the side or rear of the vehicle which engage with a body part for establishing a security function preventing inadvertent opening.

As it is the most common design variant, the present disclosure is exemplified by referring to a coach door design of a front and rear door for passengers at the side of a vehicle wherein the rear door is the constructed as a swing and slide door while the front door is a swing door. It is to be understood that this disclosure is likewise to cover doors for cargo or doors at the back of the vehicle as well as exchanged positions of the swing and slide door and the swing door. The door opening may or may not be provided with a pillar, such as a B-pillar.

In optional embodiments, the door is B-pillarless.

In embodiments, the door may comprise a further door installed adjacent to the door with a first end pivotably connected to a peripheral side of the opening in the vehicle opposite of the door and a second end distal to the first end extends in a fully closed position in a direction of a center of the opening such that the door and the further door jointly close the opening of the vehicle. This configuration corresponds to the design of a coach door where two doors or two door sections are hinged to opposite sides of the opening and close towards the center of the opening.

In embodiments, the hinge arrangement comprises a gooseneck hinge. A gooseneck hinge essentially has two branches arranged at a fixed angle to each other and a pivot axis at either end.

Essential elements of the disclosed power actuating system are the hinge arrangement and the first and second actuators arranged in the body of the vehicle and the door, respectively, as well as the controller. The disclosed opening process is done in two consecutive steps. In the first step, the hinge arrangement having two pivot axes is rotated by action of the first actuator which is directly connected to the hinge arrangement. This will slide the door rearwards and outwards into an intermediate position because the hinge arrangement is fixed with its first pivot axis to the vehicle body and its second pivot axis to the second actuator in the right side of the door while the left side of the door runs with its guide pin in the guide rail at the vehicle body side.

When the first step is completed, the door is rotated in the second step by action of the second actuator, which is also connected to the hinge arrangement, around the second pivot axis at the door into the complete open position.

Caused by the mechanical setup of the power actuating system, when the first actuator is acting on the door, the second actuator will be compressed. Particularly when the second actuator has a brake and self-locking function to keep the door in place when the opening operation is finished, the first actuator would always have to overcome this brake and self-locking force of the second actuator in order to achieve the required compression. This not only requires more driving force from the first actuator and, hence, a larger unit but also may result in damage to the actuators due to increased wear. The present disclosure solves this problem by providing a controller which is configured to activate both actuators simultaneously during the first step. Activation of the second actuator will disengage its brake and self-locking function so that the first actuator will not have to overcome it. Further, they may even work cooperatively to initiate the rotation which will further reduce the required driving force and size of the first actuator and balance the whole system. The resulting door movement controlled by two actuators will be smooth and harmonic.

In embodiments, the first actuator and/or the second actuator may be linear actuators. The implementation as linear actuators can be advantageous for the required installation space and the introduction of the acting force into the hinge arrangement.

In embodiments, also pivoting of the further door may be power actuated. The implementation of a further power actuator in the further door will allow for a fully automatic opening mode of the whole door. The further power actuator may be a linear actuator as well or a rotational actuator. Since the two doors can be opened fully independently and non-sequentially, operation of the further power actuator need not be coordinated with the first and second actuator.

In embodiments, the first actuator and/or the second actuator may have a brake and self-locking function. A brake and self-locking function of the actuators will ascertain that the door remains in its position. This prevents the door from inadvertently opening or closing. Since the controller operates in the first step of the opening procedure both actuators simultaneously, they not only can jointly initiate movement of the hinge arrangement but will also disengage their brake and self-locking function. Hence, an activated actuator will not have to work against the brake and locking forces of the other actuator.

In embodiments, the door may be a passenger and/or cargo door and/or the door may be arranged at the sides or the back of the vehicle. As mentioned above, the present disclosure may likewise be used for all of these types and positions of doors.

In embodiments, the vehicle opening covered by the door may be pillarless. Optionally, the vehicle opening is a side opening covering the front and rear seat rows and is B-pillarless.

In embodiments, the two branches of the hinge arrangement may span an angle of from 30° to 150° or from 45° to 135° or from 60° to 120°. Depending on the design of the doors and the vehicle body adjacent to the door opening, these angles have been found to be suitable for optimal operation of the door. Where in the case of a gooseneck hinge is used as the hinge arrangement and the branches have a fully or partially arcuate shape, the angle is meant to be determined between tangents at the terminal ends of the branches where the pivot axes are located.

### Short description of the Figures

- **Figure 1**: shows in top view a principal sketch of a vehicle door with the power actuating sys-tem in a fully closed position.
- **Figure 2**: shows the door of Figure 1 in a position at the end of step 1.
- **Figure 3**: shows the door of Figure 1 in a fully open position.
- **Figure 4**: shows in top view a simplified sketch of a vehicle door in a position between a fully closed position and a position at the end of step 1.

### Description of the Figures

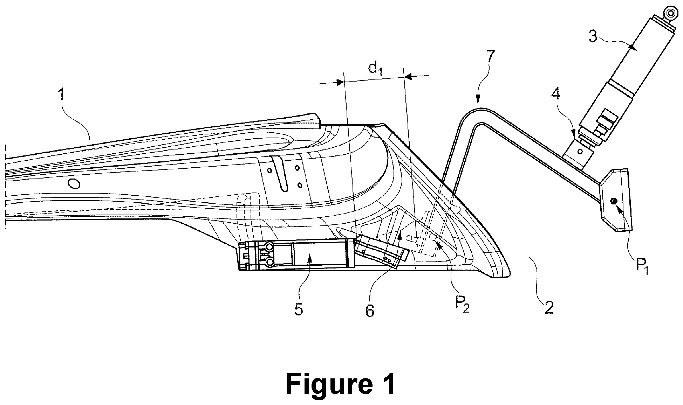

In **Figure 1****,** a top view of a principal sketch of a vehicle door **1** with the power actuating system **2** in a fully closed position is shown. For better overview, the vehicle body which would be positioned at the top side of the figure is not shown. The door **1** is also only partially shown with its right side comprising the components of the power actuating system **2.** As shown in the figure, the front of the vehicle would be on the left side and the door is the rear door designed as the swing and slide door. The front door as the further door **1** would consequently follow further to the left and be designed as a standard swing door which can also be power operated.

The first actuator **3** with its first actuating member **4** and the second actuator **5** with its second actuating member **6** are in this example both linear actuators having a brake and self-locking function. The terminal end of the first actuator **3** distal to its first actuating member **4** is mounted to the body of the vehicle. The terminal end of the first actuating member **4** is pivotably connected to the first branch of the hinge arrangement which is in this example a gooseneck hinge **7.** The latter is on one side also mounted to the body of the vehicle with its pivot axis **P₁** and on the other side with its pivot axis **P₂** to the second actuator **5.** The second actuating member **6** is pivotably connected to the second branch of the gooseneck hinge **7.** The distance between the second actuator **5** and the connection point of its second actuating member **6** with gooseneck hinge **7,** i.e., the extension length of second actuating member **6,** is marked with **d₁**.

When door **1** is to be opened, the controller (not shown) will in the first step activate the first actuator **3** to push first actuating member **4** forward and rotate gooseneck hinge **7** around pivot axis **P₁** (counterclockwise in the figure). This will push the rear end of the door away from the vehicle body and further to the rear which is the right side in the figure. On the left side, the front end of the door **1** is guided by a guide pin in a guide rail installed on the body at the lower end of the door opening (not shown in this figure). Consequently, the link between the second actuator **5** and gooseneck hinge **7** swivels around pivot axis **P₂** and, hence, shortens distance **d₁**. Hence, the design and arrangement of the gooseneck hinge **7** and second actuator **5** must be chosen such that, in the fully closed position of the second section of door **1,** second actuating member **6** can be further retracted.

In order to avoid that during this operation the first actuator **3** must work against the braking and self-locking function of the second actuator **5,** the controller will activate the second actuator **5** simultaneously with it to retract its second actuating member **6.** This deactivates the braking and self-locking function and further supports the rotation of gooseneck hinge **7.** As a result of this cooperative action of the two actuators, the first actuator **3** can be designed much smaller because less driving force is required. Moreover, the movement of the door is smoother.

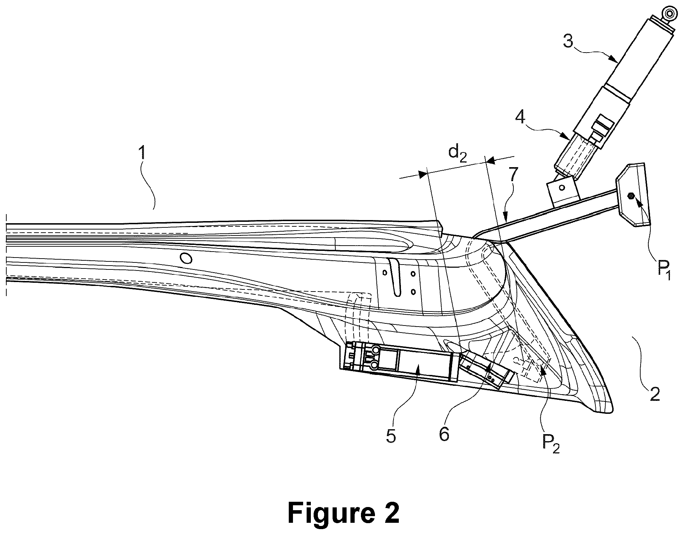

**Figure 2** shows the situation at the end of the first step. The first actuating member **4** of first actuator **3** has reached its full extension and the gooseneck hinge **7** its final swivel position. In this position, the door **1** has moved sufficiently to the rear from behind the further door to clear the path for swinging the door **1** open by swiveling around pivot axis **P₂**. The distance **d₂** of second actuating member **6** has reached its minimum value. The first actuator **3** will then be deactivated to hold gooseneck hinge **7** in place. The guide pin has reached the end section of the guide rail (not shown in the figure) where it can be detached from it to allow the swiveling of the second section of door **1** around pivot axis **P₂** for fully opening the door.

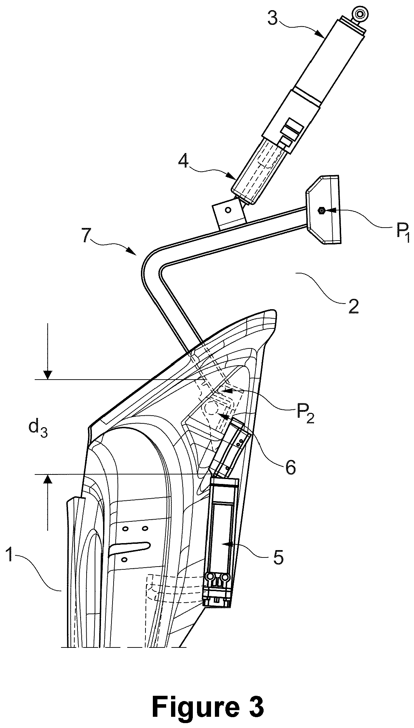

In the second step, the second actuator **5** extends its second actuating member **6** to initiate the swiveling around pivot axis **P₂**. The door **1** then swings open to a predetermined opening angle in its fully open position. This situation is shown in **Figure 3****.** Distance **d₃** of second actuating member **6** has now reached its maximum value, i.e., it is fully extended. Of course, a passenger can stop the opening or closing process at any desired intermediate opening angle. The closing of door **1** will be executed in reverse order.

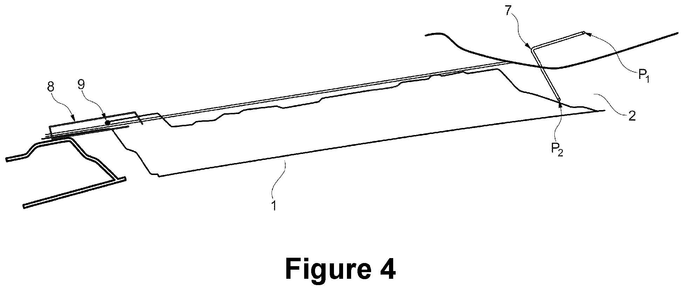

**Figure 4** shows in top view a simplified wireframe sketch of a vehicle door **1** in a position between the fully closed position and the position at the end of the first step. At the lefthand side of the figure, the right side of the further door **1** can be seen which overlaps with the door **1** in the fully closed position of the door **1.** Further, a guide rail **8** is shown which is attached to the body of the vehicle and guides guide pin **9** positioned underneath the left side of the door **1.** The guide rail **8** has in this example an aperture in its wall at the right side corresponding to the position of the guide pin **9** at the end of step 1 and allowing it to be swiveled outside with the door **1** in the second step. Hence, in this depicted intermediate position, guide pin 9 has not yet reached the aperture of guide rail **8.**

An alternative variant of the detaching function may be a fully closed guide rail **8** which cooperates with a guide pin **9** which is retractable upwards into the door **1** either mechanically or preferably electrically by a solenoid or electric actuator. Further, at the top and right side of the figure, the vehicle body is shown and gooseneck hinge **7** for indication of the pivot axes while both the first actuator **3** and second actuator **5** including their first actuating member **4** and second actuating member **6** of the power actuating system **2** have been omitted for better overview.

### Reference numerals

- **1**: door
- **2**: power actuating system
- **3**: first actuator
- **4**: first actuating member
- **5**: second actuator
- **6**: second actuating member
- **7**: gooseneck hinge
- **8**: guide rail
- **9**: guide pin
- **P₁**, **P₂**: pivot axes

## Claims

1. Power actuated door (**1**) for vehicles, wherein the door (**1**) is with a first end pivotably and translationally connected to a peripheral side of an opening in the vehicle and a second end distal to the first end is provided with a guide pin (**9**), which is disconnectably guided by a guide rail (**8**) which is installed parallel to the opening on a body part of the vehicle; and
wherein the door (**1**) is provided with a power actuating system (**2**) comprising
- a first actuator (**3**) having a first actuating member (**4**) and being installed on a body part of the vehicle adjacent to the first end of the door (**1**);
- a second actuator (**5**) having a second actuating member (**6**) and being installed on the door (**1**) of the vehicle;
- a hinge arrangement having a pivot axis **P₁** fixed to the body part of the vehicle and a pivot axis **P₂** connected to the second actuator (**5**) wherein the first actuating member (**4**) acts on a point on a first branch of the hinge arrangement and wherein the second actuating member (**6**) acts on a point on a second branch of the hinge arrangement; and
- a controller configured to control movement of the power actuating system (**2**) in a first step from a fully closed position of the door (**1**) to an intermediate position and in a second step from the intermediate position to a fully open position of the door (**1**),
wherein in the first step the hinge arrangement is rotated around pivot axis **P₁** by action of the first actuating member (**4**) causing the door (**1**) to slide guided on the second end by guide pin (**9**) in guide rail (**8**) in the direction of the first end which simultaneously is pushed outside the opening of the vehicle so that at the end of the first step the guide pin (**9**) is in its detachable position, and
wherein in the second step the door (**1**) is rotated around pivot axis **P₂** by action of the second actuating member (**6**) causing the guide pin (**9**) to detach from guide rail (**8**), and
wherein the controller activates in the first step the second actuator (**5**) simultaneously with the first actuator (**3**) and in the second step only the second actuator (**5**).

2. Power actuated door (**1**) according to claim 1, wherein the door (**1**) comprises a further door (**1**) installed adjacent to the door (**1**) with a first end pivotably connected to a peripheral side of the opening in the vehicle opposite of the door (**1**) and a second end distal to the first end extends in a fully closed position in a direction of a center of the opening such that the door (**1**) and the further door (**1**) jointly close the opening of the vehicle.

3. Power actuated door (**1**) according to claim 1 or 2, wherein the hinge arrangement comprises a gooseneck hinge (**7**).

4. Power actuated door (**1**) according to one of the preceding claims, wherein the first actuator (**3**) and/or the second actuator (**5**) is/are linear actuators.

5. Power actuated door (**1**) according to one of the claims 2 to 4, wherein pivoting of the further door (**1**) is power actuated.

6. Power actuated door (**1**) according to one of the preceding claims, wherein the first actuator (**3**) and/or the second actuator (**5**) have a brake and self-locking function.

7. Power actuated door (**1**) according to one of the preceding claims,
wherein the door (**1**) is a passenger and/or cargo door and/or the door (**1**) is arranged at the sides or the back of the vehicle, and/or
wherein the vehicle opening covered by the door (**1**) is pillarless..

8. Power actuated door (**1**) according to one of the preceding claims, wherein the two branches of the hinge arrangement span an angle of from 30° to 150° or from 45° to 135° or from 60° to 120°.

9. Power actuating system (**2**) for doors (**1**) of vehicles comprising
- a first actuator (**3**) having a first actuating member (**4**) and to be installed on a body part of the vehicle at a peripheral side of an opening in the vehicle adjacent to a first end of the door (**1**);
- a second actuator (**5**) having a second actuating member (**6**) and to be installed in the door (**1**) of the vehicle;
- a hinge arrangement having a pivot axis **P₁** fixed to the body part of the vehicle and a pivot axis **P₂** connected to the second actuator (**5**) wherein the first actuating member (**4**) acts on a point on a first branch of the hinge arrangement and wherein the second actuating member (**6**) acts on a point on a second branch of the hinge arrangement; and
- a controller configured to control movement of the power actuating system (**2**) in a first step from a fully closed position of the door (**1**) to an intermediate position and in a second step from the intermediate position to a fully open position of the door (**1**), wherein in the first step the hinge arrangement is rotated around pivot axis **P₁** by action of the first actuating member (**4**), and wherein in the second step the door (**1**) is rotated around pivot axis **P₂** by action of the second actuating member (**6**), and wherein the controller is configured to activate in the first step the second actuator (**5**) simultaneously with the first actuator (**3**) and in the second step only the second actuator (**5**).

10. Power actuating system (**2**) according to claim 9, wherein the hinge arrangement comprises a gooseneck hinge (**7**).

11. Power actuating system (**2**) according to claim 9 or 10, wherein the first actuator (**3**) and/or the second actuator (**5**) have a brake and self-locking function.

12. Method for controlling a power actuating system (**2**) for doors (**1**) of vehicles according to one of the claims 9 to 11 comprising a first actuator (**3**) and a second actuator (**5**), wherein movement of the power actuating system (**2**) is effected in two consecutive steps and in a first step the second actuator (**5**) is activated simultaneously with the first actuator (**3**) and in a second step only the second actuator (**5**).

13. Computer program product comprising portions of program code which, when executed by a processor of a controller, configure the controller to perform the method according to claim 12.

14. Controller for a power actuating system (**2**) for doors (**1**) of vehicles, the controller comprising a processor and a storage device operatively coupled to the processor, wherein the storage device comprises portions of program code which, when executed by the processor, cause the controller to perform the method according to claim 12.

15. Vehicle comprising a controller according to claim 14.

## Amended claims

### Amended claims in accordance with Rule 137(2) EPC.

1. Power actuated door (**1**) for vehicles, wherein the door (**1**) is with a first end pivotably and translationally connected to a peripheral side of an opening in the vehicle and a second end distal to the first end is provided with a guide pin (**9**), which is disconnectably guided by a guide rail (**8**) which is installed parallel to the opening on a body part of the vehicle; and wherein the door (**1**) is provided with a power actuating system (**2**) comprising
- a first actuator (**3**) having a first actuating member (**4**) and being installed on a body part of the vehicle adjacent to the first end of the door (**1**);
- a second actuator (**5**) having a second actuating member (**6**) and being installed on the door (**1**) of the vehicle;
- a hinge arrangement having a pivot axis **P₁** fixed to the body part of the vehicle and a pivot axis **P₂** connected to the second actuator (**5**) wherein the first actuating member (**4**) acts on a point on a first branch of the hinge arrangement and wherein the second actuating member (**6**) acts on a point on a second branch of the hinge arrangement; and
- a controller configured to control movement of the power actuating system (**2**) in a first step from a fully closed position of the door (**1**) to an intermediate position and in a second step from the intermediate position to a fully open position of the door (**1**),
**characterized in that** in the first step the controller activates the second actuator (**5**) simultaneously with the first actuator (**3**), and the hinge arrangement is rotated around pivot axis **P₁** by action of the first actuating member (**4**) causing the door (**1**) to slide guided on the second end by guide pin (**9**) in guide rail (**8**) in the direction of the first end which simultaneously is pushed outside the opening of the vehicle so that at the end of the first step the guide pin (**9**) is in its detachable position, and
wherein in the second step the controller activates only the second actuator (**5**) and the door (**1**) is rotated around pivot axis **P₂** by action of the second actuating member (**6**) causing the guide pin (**9**) to detach from guide rail (**8**).

2. Power actuated door (**1**) according to claim 1, wherein the door (**1**) comprises a further door (**1**) installed adjacent to the door (**1**) with a first end pivotably connected to a peripheral side of the opening in the vehicle opposite of the door (**1**) and a second end distal to the first end extends in a fully closed position in a direction of a center of the opening such that the door (**1**) and the further door (**1**) jointly close the opening of the vehicle.

3. Power actuated door (**1**) according to claim 1 or 2, wherein the hinge arrangement comprises a gooseneck hinge (**7**).

4. Power actuated door (**1**) according to one of the preceding claims, wherein the first actuator (**3**) and/or the second actuator (**5**) is/are linear actuators.

5. Power actuated door (**1**) according to one of the claims 2 to 4, wherein pivoting of the further door (**1**) is power actuated.

6. Power actuated door (**1**) according to one of the preceding claims, wherein the first actuator (**3**) and/or the second actuator (**5**) have a brake and self-locking function.

7. Power actuated door (**1**) according to one of the preceding claims,
wherein the door (**1**) is a passenger and/or cargo door and/or the door (**1**) is arranged at the sides or the back of the vehicle, and/or
wherein the vehicle opening covered by the door (**1**) is pillarless..

8. Power actuated door (**1**) according to one of the preceding claims, wherein the two branches of the hinge arrangement span an angle of from 30° to 150° or from 45° to 135° or from 60° to 120°.

9. Power actuating system (**2**) for doors (**1**) of vehicles comprising
- a first actuator (**3**) having a first actuating member (**4**) and to be installed on a body part of the vehicle at a peripheral side of an opening in the vehicle adjacent to a first end of the door (**1**);
- a second actuator (**5**) having a second actuating member (**6**) and to be installed in the door (**1**) of the vehicle;
- a hinge arrangement having a pivot axis **P₁** fixed to the body part of the vehicle and a pivot axis **P₂** connected to the second actuator (**5**) wherein the first actuating member (**4**) acts on a point on a first branch of the hinge arrangement and wherein the second actuating member (**6**) acts on a point on a second branch of the hinge arrangement; and
- a controller configured to control movement of the power actuating system (**2**) in a first step from a fully closed position of the door (**1**) to an intermediate position and in a second step from the intermediate position to a fully open position of the door (**1**), **characterized in that** in the first step the controller is configured to activate the second actuator (**5**) simultaneously with the first actuator (**3**) and the hinge arrangement is rotated around pivot axis **P₁** by action of the first actuating member (**4**), and wherein in the controller is configured to activate only the second actuator (**5**) and the second step the door (1) is rotated around pivot axis **P₂** by action of the second actuating member (**6**).

10. Power actuating system (**2**) according to claim 9, wherein the hinge arrangement comprises a gooseneck hinge (**7**).

11. Power actuating system (**2**) according to claim 9 or 10, wherein the first actuator (**3**) and/or the second actuator (**5**) have a brake and self-locking function.

12. Method for controlling a power actuating system (**2**) for doors (**1**) of vehicles according to one of the claims 9 to 11 comprising a first actuator (**3**) and a second actuator (**5**), **characterized in that** movement of the power actuating system (**2**) is effected in two consecutive steps and in a first step the second actuator (**5**) is activated simultaneously with the first actuator (**3**) and in a second step only the second actuator (**5**).

13. Computer program product comprising portions of program code which, when executed by a processor of a controller, configure the controller to perform the method according to claim 12.

14. Controller for a power actuating system (**2**) for doors (**1**) of vehicles, the controller comprising a processor and a storage device operatively coupled to the processor, wherein the storage device comprises portions of program code which, when executed by the processor, cause the controller to perform the method according to claim 12.

15. Vehicle comprising a controller according to claim 14.
